# EUROPEAN PATENT SPECIFICATION

(11) **EP 3 740 404 B1**
(45) Date of publication and mention of the grant of the patent: **28.02.2024**
(21) Application number: 19700897.2
(22) Date of filing: 15.01.2019
(51) Int. Cl.: B60S 1/56, B60S 1/52

(54) **CLEANING APPARATUS FOR CLEANING A TRANSPARENT FRONT ELEMENT OF AN OPTICAL SENSOR FOR A MOTOR VEHICLE, AS WELL AS ASSEMBLY**
REINIGUNGSVORRICHTUNG ZUM REINIGEN EINES TRANSPARENTEN FRONTELEMENTS EINES OPTISCHEN SENSORS FÜR EIN KRAFTFAHRZEUG, SOWIE ANORDNUNG
APPAREIL DE NETTOYAGE DESTINÉ À NETTOYER UN ÉLÉMENT AVANT TRANSPARENT D'UN CAPTEUR OPTIQUE POUR VÉHICULE AUTOMOBILE, AINSI QUE ENSEMBLE

(30) Priority: 16.01.2018 DE 102018100805
(43) Date of publication of application: 25.11.2020
(73) Proprietor: Connaught Electronics Ltd., Tuam, County Galway (IE)
(72) Inventor: WARD, Enda Peter, Galway (IE)
(74) Representative: Jauregui Urbahn, Kristian
(86) International application number: PCT/EP2019/050898
(87) International publication number: WO 2019/141665

(56) References cited:
- EP-A1- 1 399 340
- EP-A1- 2 336 749
- EP-A1- 3 121 070
- DE-A1- 19 704 818
- DE-C1- 10 049 851
- US-A1- 2014 029 005
- US-A1- 2016 170 203
- US-A1- 2016 311 405
- US-A1- 2018 329 205

## Description

The invention relates to a cleaning apparatus for cleaning a transparent front element of an optical sensor for a motor vehicle. Further, the invention relates to an assembly.

From the prior art, detector devices for receiving light beams for motor vehicles are already known. They comprise a transparent front element. In particular in the employment at the motor vehicle, contaminations on the transparent front element can therein occur. Impairment of the received information by the detector device can occur by the contamination. In order to be able to restore the functionality of the detector device, cleaning of the transparent front element is required. Presently, it is known that such a contamination is for example performed by manually activating a liquid and/or air cleaning system.

Systems are known from the prior art, which can recognize a degree of contamination by means of a wavelength analysis. For example, US 8,406,859 B2 discloses image spectroscopy, which results in collecting or capturing image-spectroscopic data.

Furthermore, WO 2012/065952 A1 discloses a method for validating or verifying a cleaning process of a surface, which is contaminated with at least one chemical substrate. US 2016/311405 A1 discloses the preamble of claim 1.

It is the object of the present invention to provide a cleaning apparatus as well as an assembly, by means of which a contamination of a transparent front element can be reliably eliminated.

This object is solved by a cleaning apparatus as well as an assembly according to the independent claims.

An aspect of the invention relates to a cleaning apparatus for cleaning a transparent front element of an optical sensor of a camera for a motor vehicle. The cleaning apparatus comprises the transparent front element and a light source for externally illuminating the front element with light beams. Further, the cleaning apparatus comprises a detector device for receiving the light beams passed through the front element. Furthermore, the cleaning apparatus comprises an evaluation device, which is formed for evaluating the light beams received by the detector device for determining a degree of contamination of the front element. Depending on the evaluation, a control signal for a cleaning device of the cleaning apparatus can be generated such that the front element is cleanable by means of the cleaning device.

Thereby, it is allowed that the degree of contamination can be accurately captured and then the control signal for cleaning the transparent front element can be correspondingly performed depending on the respective degree of contamination. Thus, it is allowed that light beams for the optical sensor can arrive at the optical sensor, for example at an image sensor of the optical sensor, in improved manner, whereby improved operation of the optical sensor is allowed. Thereby, impairment in particular does not occur at the optical sensor since the transparent front element is cleaned in improved manner.

Furthermore, it is thereby allowed that the transparent front element can be purposefully cleaned. In other words, if a contamination should not be present on the transparent front element, the cleaning signal for the cleaning device is not generated. Thus, a cleaning medium can for example be saved. However, if the transparent front element should be contaminated, thus, the transparent front element can be correspondingly purposefully cleaned. Thereby, both the energy consumption of the cleaning device and for example the cleaning medium consumption of the cleaning apparatus can be reduced.

In particular, after cleaning the transparent front element, further external illumination of the front element can be performed to check the cleaning of the front element and optionally, if a contamination should for example further be recognized, to be able to again perform a cleaning process.

According to an advantageous form of configuration, at least the cleaning device can be mounted displaceably relative with respect to the front element, in particular mounted on a telescopic arm, and/or the light source and the cleaning device can be disposed in a common housing. By mounting the cleaning device on a telescopic arm, it is in particular allowed that improved aerodynamics of the motor vehicle can be realized since the cleaning device in particular does for example not protrude from a trim part of the motor vehicle if it should not be actuated. In particular upon actuation of the cleaning device, wherein actuation in particular means upon generation of the control signal, the telescopic arm with the cleaning device can then for example extend from the trim part and perform the cleaning of the front element. Thereby, it is in particular allowed that reliable cleaning of the front element can be performed with little negative aerodynamic effects since in particular after extending the telescopic arm with the cleaning device, improved cleaning of the front element can be performed due to the angular position to the front element. Alternatively or additionally, it is advantageous if the light source and the cleaning device are disposed in a common housing. In particular, the light source and the cleaning device can then be disposed within the one housing in material and space saving manner. Thus, the light source and the cleaning device can be formed as a common component. Thereby, reliable and efficient cleaning of the front element can be performed.

Alternatively or additionally, it is possible that the detector device is disposed in the common housing with the light source and/or the cleaning device. Thereby, it is allowed that determination of the degree of contamination can yet be captured with a severe contamination of the front element even if light beams no longer get through the transparent front element.

It has further proven advantageous if the cleaning apparatus is formed for generating ultrasonic waves, wherein the front element is cleanable by means of the ultrasonic waves. It is in particular possible that the ultrasonic waves are exerted on the contamination correspondingly long in time depending on the degree of contamination such that the contamination can be advantageously removed. Further, the ultrasonic waves can be emitted with different wavelengths such that a more advantageous cleaning of the front element can be performed.

It is also advantageous if the cleaning device comprises a liquid cleaning medium, which is stored in a cleaning reservoir, and the liquid cleaning medium can be sprayed onto the front element via a cleaning nozzle of the cleaning device such that the front element is cleanable by means of the cleaning medium. The cleaning reservoir can for example be a cleaning reservoir of the cleaning apparatus, however, it is also possible that it is for example resorted to reservoirs already installed in the motor vehicle such that the cleaning medium of a windscreen wiping device is for example used and thus it can be resorted to the cleaning reservoir of the windscreen wiping device. Thereby, reliable cleaning of the front element can in particular be allowed. Furthermore, the cleaning can for example be performed without additional reservoir since it can be resorted to systems already installed in the motor vehicle.

It has further proven advantageous if the cleaning apparatus comprises an air pressure nozzle, by means of which an air jet can be generated, which can be jetted to the front element, whereby the front element is cleanable. Thus, cleaning of the front element can be performed by means of air. Thereby, improved cleaning of the front element can be performed.

According to a further advantageous form of configuration, the degree of contamination can be determinable depending on at least one received wavelength of the light beams and/or a contamination material and/or a contamination intensity can be determinable as the degree of contamination by means of the evaluation device, and the control signal can be generable at least depending on the contamination material and/or the contamination intensity. Since in particular different contamination materials and different contamination intensities, respectively, exert a different influence on the emitted wavelength by the light source and the received wavelength of the light beams, reliable determination of the degree of contamination in particular as a contamination material and/or as a contamination intensity can be determinable by means of this method. Thus, the degree of contamination can be determined in detailed manner and the control signal can be correspondingly generated. Thereby, advantageous cleaning of the front element can be performed.

Preferably, it is possible that the light beams are received by means of the detector unit and compared by means of reference light beams. Thereby, the degree of contamination can be reliably determined.

The invention further includes the light source comprising at least two light emitting diodes, wherein light beams with a first wavelength can be emitted by a first light emitting diode and light beams with a second wavelength different from the first wavelength can be emitted by at least one second light emitting diode. In particular, it can be provided that the wavelengths of the at least two light emitting diodes are in a range not visible to the human eye. For example, the wavelengths can be ultraviolet or infrared radiation. Furthermore, it is also possible that visible light beams are emitted. It is also possible that light beams with a higher wavelength than infrared can be emitted. It is also possible that a combination of different light beams can be emitted. Thereby, multi-spectral and hyper-spectral analysis is in particular allowed, which allows accurate characterization of the degree of contamination. Thereto, the detector unit and the transparent front element can in particular allow transmission and detection of the corresponding wavelengths. For example, this can be allowed by a standard silicon image sensor with filters with corresponding wavelengths or with corresponding combinations for receiving units, which are disposed in the image sensor. Further, it is possible that the light source comprises a plurality of light emitting diodes, which each emit light beams with different wavelength such that a reliable evaluation can be performed.

According to a further advantageous form of configuration, at least information of an environment of the front element can be able to be taken into account in the evaluation of the received light beams. Thereby, improved calibration of the detector unit can be performed since the environmental light beams are known and can then for example be correspondingly subtracted from the reference light beams, to which they are compared, such that only the light beams emitted by the light source are taken into account in the evaluation of the degree of contamination.

It is also advantageous if the cleaning apparatus is formed for receiving information, which relates to reception of light beams by an image sensor of the optical sensor, wherein the evaluation device is formed to take into account this information in the evaluation for the determination of the degree of contamination of the front element. In other words, a camera can for example serve as the optical sensor. Then, the captured information by the image sensor of the camera can be taken into account in the evaluation. In particular, only the image sensor of the optical sensor can be used for evaluation by the evaluation device of the cleaning apparatus. Thereby, the cleaning apparatus can still reliably determine the degree of contamination in particular reduced in components and thereby perform a reliable cleaning of the transparent front element.

Further, it can be provided that the cleaning apparatus comprises a communication device for bidirectional communication of information with at least one information device disposed externally to the cleaning apparatus, wherein information received from the information device can be taken into account in the evaluation by the evaluation device. For example, information of a vehicle-to-infrastructure can be taken into account in the evaluation. It is also possible that information of a vehicle-to-vehicle structure can be taken into account in the evaluation. For example, the vehicle-to-infrastructure information and the vehicle-to-vehicle information, respectively, can be weighted, for example with respect to the input time, and then be incorporated in the evaluation. The vehicle-to-infrastructure information can for example be Cloud-based information.

Preferably, it can be provided that other vehicles for example also obtain the information of the evaluation device and it is taken into account in a cleaning process in for example optical sensors of the further motor vehicles. This has the advantage that the further vehicles for example do not have to comprise a cleaning apparatus according to the invention, but only the corresponding cleaning device to be able to perform cleaning. The corresponding information about the cleaning process can be provided by the motor vehicle with the cleaning apparatus according to the invention.

It has further proven advantageous if a plurality of control signals, in particular of different control signals, is generable by the evaluation device for the cleaning device. If the cleaning device should for example comprise an air pressure nozzle and a cleaning nozzle, a cleaning cycle can in particular be performed depending on the degree of contamination and in particular depending on the contamination intensity and the contamination material. For example, cleaning can then first be performed by means of the air pressure nozzle and subsequently by means of the cleaning nozzle. A possible combination of any proposed cleaning methods, in other words, by means of ultrasound, by means of the cleaning medium and by means of the air pressure nozzle, is also possible. It is also possible that the corresponding cleaning process can be performed multiple times.

Preferably, it is possible that the information about for example a successful cleaning process is stored in a storage device of the motor vehicle such that it is available in the future. This stored information can for example also be provided for a car wash such that the motor vehicle provides this information to the car wash upon entry in the car wash such that it is for example informed about the degree of contamination and thereby about the contamination intensity and the contamination material such that a particularly preferred program can be automatically selected in the car wash. In that the motor vehicle has an at least similar contamination state as the transparent front element, thus, improved cleaning of the motor vehicle can be able to be performed.

Preferably, the cleaning apparatus can for example also be formed in a screen wiping system for cleaning vehicle panes or windscreens.

A further possibility is in that the cleaning apparatus is accommodated in a drone and the drone for example flies to a motor vehicle and determines the degree of contamination. For example, the drone can then fly from optical sensor to optical sensor and check the cleaning by means of the optical sensor.

A further aspect relates to an assembly with a camera and with a cleaning apparatus according to any one of above mentioned aspects.

In an advantageous form of configuration of the assembly, information of an image sensor of the camera can be receivable by the cleaning apparatus, wherein the received information of the image sensor can be taken into account in the evaluation by the evaluation device for determining the degree of contamination. In other words, the image sensor of the camera is additionally or alternatively used as the detector device. Thus, it is allowed that the image sensor of the camera performs the method, whereby components can in particular be saved. Thereby, simple capture of the light beams is possible such that evaluation of the captured light beams can be reliably performed.

A still further aspect of the invention relates to a motor vehicle with a cleaning apparatus or with an assembly. In particular, the motor vehicle is formed as a passenger car.

Advantageous forms of configuration of the cleaning apparatus are to be regarded as advantageous forms of configuration of the assembly and of the motor vehicle, respectively.

Further features of the invention are apparent from the claims, the figures and the description of figures. The features and feature combinations mentioned above in the description as well as the features and feature combinations mentioned below in the description of figures and/or shown in the figures alone are usable not only in the respectively specified combination, but also in other combinations or alone without departing from the scope of the invention as defined by the claims.

Now, the invention explained in more detail based on preferred embodiments as well as with reference to the attached drawings.

There show:
- Fig. 1: a schematic top view to an embodiment of a motor vehicle with an assembly;
- Fig. 2: a schematic view of an embodiment of the assembly;
- Fig. 3: a schematic perspective view of an embodiment of the assembly; and
- Fig. 4: a schematic view of an embodiment of a cleaning device.

In the figures, functionally identical elements are provided with the same reference characters.

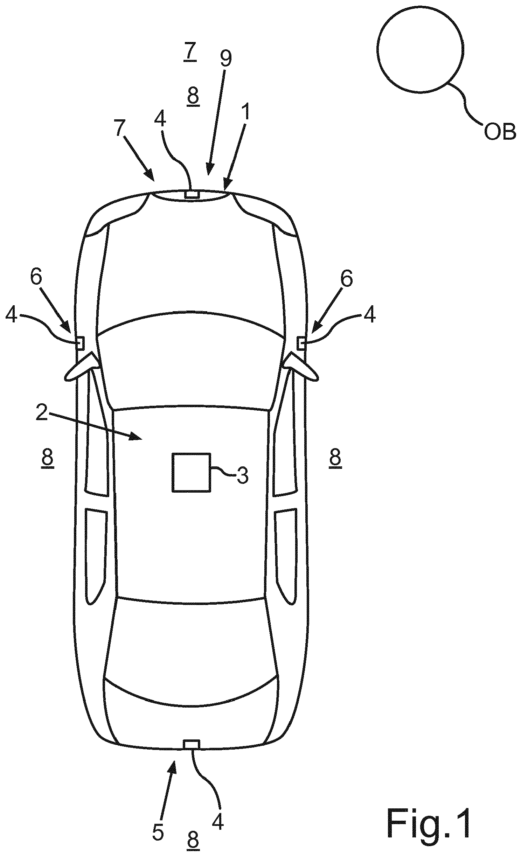

Fig. 1 shows a motor vehicle 1 according to an embodiment of the present invention in a top view. In the present case, the motor vehicle 1 is formed as a passenger car. The motor vehicle 1 comprises a camera system 2. The camera system 2 in turn comprises an image processing device 3, which can for example be constituted by an electronic controller of the motor vehicle 1. Moreover, the camera system 2 comprises at least one camera 4. In the present embodiment, the camera system 2 for example comprises four cameras 4, which are disposed distributed at the motor vehicle 1. However, only two cameras 4 or three cameras 4 or else more than four cameras 4 can for example also be provided. Presently, one of the cameras 4 is disposed in a rear area 5, one of the cameras 4 is disposed in a front area 7 of the motor vehicle 1 and the remaining two cameras 4 are disposed in a respective lateral area 6, in particular in an area of the wing mirrors. Presently, the number and arrangement of the cameras 4 of the camera system 2 are to be purely exemplarily understood.

An object OB in an environment 8 of the motor vehicle 1 can be captured by the cameras 4. Preferably, the four cameras 4 are formed identical in construction. In particular, a sequence of images can be provided by the cameras 4, which describe the environment 8. These images can be transmitted from the cameras 4 to the image processing device 3. Thus, the camera system 2 serves for assisting the driver of the motor vehicle 1 in driving the motor vehicle 1. The camera system 2 can for example be a so-called electronic rearview mirror (then it preferably comprises two cameras 4 in the lateral areas 6) or an ACC system (Adaptive Cruise Control system) or a parking assistance system or other system. It can also be formed in the motor vehicle interior for capturing a person, in particular a vehicle driver.

The motor vehicle 1 comprises a cleaning apparatus 9. Alternatively, the motor vehicle 1 can comprise an assembly 32, which comprises at least one camera 4 as an optical sensor and at least one cleaning apparatus 9.

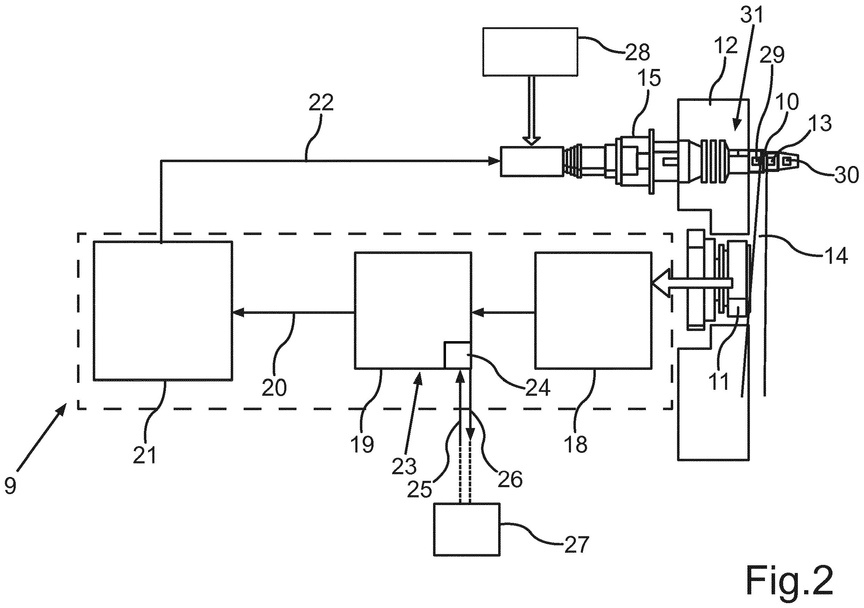

Fig. 2 shows a schematic view of an embodiment of the cleaning apparatus 9. In the following embodiment, the cleaning apparatus 9 comprises a cleaning device 10 and a transparent front element 11. The cleaning device 10 and the transparent front element 11 are disposed at a trim part 12 of the motor vehicle 1 in the present embodiment. Presently, the transparent front element 11 is for example a lens of the camera 4.

In the present embodiment, the cleaning device 10 comprises a light source 13, which emits light beams 14 for externally illuminating the front element 11. In particular, the light source 13 and the cleaning device 10 are formed in a common housing 15.

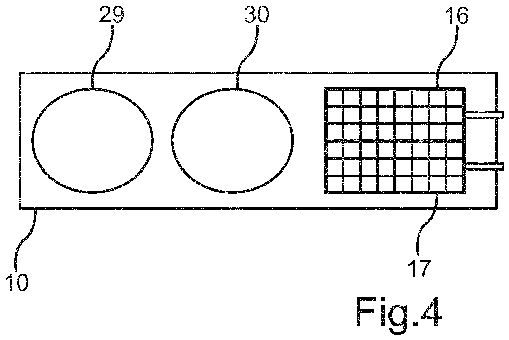

In particular, it can be provided that a lens of the light source 13 and light emitting diodes 16, 17 (Fig. 4) of the light source 13 are formed as multi-array LEDS in order to be able to perform downsizing of the cleaning device 10. It can be provided that the light emitting diodes 16, 17 are wired or have been produced by means of a flexible circuit board, a standard circuit board or by means of another injection molding method.

A detector device 18 of the cleaning apparatus 9 is formed for receiving the light beams 14 passing through the front element 11. It can be provided that the detector device 18 is formed as an image sensor of the camera 4. The detector device 18 in turn is coupled to an evaluation device 19, which in particular can perform a determination of the degree of contamination of the front element 11.

In particular, it is allowed that the detector device 18, which can for example be formed as an image sensor of the camera 4, performs both the image processing for the camera 4 and the detection for the cleaning apparatus 9. For example, light beams 14 in the ultraviolet range, in the range visible to the human eye, infrared range or in an even higher wavelength range can be detected by means of the detector device 18.

Based on the passed light beams, in particular based on the wavelength of the light beams, the degree of contamination can in particular be determinable by means of the evaluation device 19. In particular, a contamination material and/or a contamination intensity are determinable as the degree of contamination and a control signal 20 for a control device 21 can be generable depending on the degree of contamination such that a control signal 22 for the cleaning device 10 is reliably generable.

In the evaluation of the received light beams 14, at least information 23 of an environment of the front element 11 can in particular be taken into account. This information 23 can in particular for example be environmental light beams such that they can be taken into account in the analysis.

Further, the cleaning apparatus 9 can comprise a communication device 24, which is formed for bidirectional communication 25, 26 of information with at least one information device 27 disposed externally to the cleaning apparatus 9, wherein information 25 received from the information device 27 can be taken into account in the evaluation by the evaluation device 19.

The information device 27 in turn can for example be formed as a part of a vehicle-to-infrastructure and vehicle-to-vehicle information device, respectively. Thus, data can for example be exchanged in Cloud-based manner such that the cleaning apparatus 9 can obtain received information 25 from this Cloud. Further, the information device 27 can be formed as a part of a further motor vehicle and the evaluation device 19 can for example send the processed information about the environment, in particular about the degree of contamination, to the information device 27 such that for example further motor vehicles, which in particular do not comprise a cleaning apparatus 9 according to the invention, obtain the information such that a corresponding cleaning can also be performed on the further motor vehicle without corresponding detection.

The cleaning apparatus 9, in particular the cleaning device 10, is in particular formed for generating ultrasonic waves, wherein the front element 11 is cleanable by means of the ultrasonic waves. Further, the cleaning device 10 can comprise a liquid cleaning medium, which is stored in a cleaning reservoir 28, and the liquid cleaning medium can be sprayed onto the front element 11 via a cleaning nozzle 29 of the cleaning device 10 such that the front element 11 is cleanable. The cleaning reservoir 28 can for example be a cleaning reservoir of the cleaning apparatus 9 or a cleaning reservoir of a wiping system of the motor vehicle 1.

Further, it can be provided that the cleaning apparatus 9 comprises an air pressure nozzle 30, by means of which an air jet is generable, which can be jetted to the front element 11, whereby the front element 11 is cleanable.

Further, it can be provided that at least the cleaning device 10, in the present case the cleaning device 10 and the light source 13, is mounted displaceably relative at least with respect to the front element 11 on a telescopic arm 31.

Further, it can be provided that a plurality of control signals 22, in particular of different control signals 22, is generable for the cleaning device 10 by means of the control device 21 such that the front element 11 is cleanable by means of the different possibilities, for example by means of an air jet and/or by means of the cleaning medium and/or by means of ultrasonic waves. In particular, a cleaning cycle can also be performed such that the cycle can be successively performed for example by means of the different cleaning possibilities such that advantageous cleaning of the front element 11 can be performed.

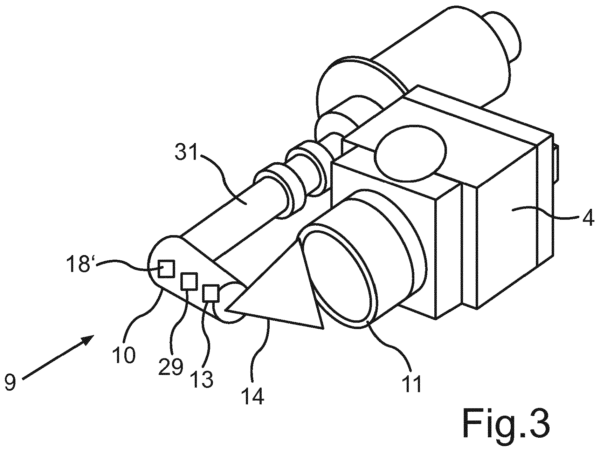

Fig. 3 shows a schematic perspective view of an embodiment of the cleaning apparatus 9. The cleaning apparatus 9 comprises the telescopic arm 31, which in particular comprises the light source 13 and the cleaning device 10. In the present embodiment, the image sensor of the camera 4 is in particular formed as the detecting device 18. Thereto, the image sensor can in particular be set in a cleaning detection state. The telescopic arm 31 can in particular extend with the light source 13 and illuminate the front element 11 with the light beams 14. The light beams 14 are transmitted through the front element 11 corresponding to the degree of contamination on the front element 11 and received by the image sensor. The image sensor can in particular compare the received light beams by means of reference light beams and thereby perform a contamination analysis of the degree of contamination. In particular, background illumination of the environment 8 can be taken into account in the evaluation. Depending on the evaluation, a corresponding cleaning mode can be determined. For example, an amount of the liquid medium, an air mixture, an activation time or a cycle number can be set or determined depending on the evaluation.

After cleaning, the front element 11 can again be checked for contamination and if a contamination should for example be again detected, thus, a cleaning cycle can again be performed.

It is possible that the further motor vehicles get provided the information of the evaluation device 19 such that the further motor vehicles can also use the information for cleaning. It is also possible that the information can be correspondingly stored in a storage medium of the cleaning apparatus 9 and the proper cleaning operation can also be stored depending on the degree of contamination. It is also possible that the stored information can for example be passed to a car wash since it is to be assumed that the motor vehicle 1 has a similar degree of contamination as the front element 11. Thereby, this information can be reliably passed to the car wash and the motor vehicle 1 can be reliably freed from the contamination.

For example, the cleaning apparatus 9 can also be employed for a windscreen or further optical sensors. It is also possible that a detector device 18' is co-arranged at the cleaning device 10 such that in case of a severe contamination of the front element 11, the contamination can be detected by the further detector device 18'.

Fig. 4 shows a schematic view of a cleaning device 10. In the following embodiment, the cleaning device 10 comprises the cleaning nozzle 29 and the air pressure nozzle 30. Further, the cleaning device 10 comprises two light emitting diodes 16, 17, which are formed as a multi-array LED in the present example. In particular, a first light emitting diode 16 emits light beams 14 with a first wavelength and a second light emitting diode 17 emits light beams 14 with a second wavelength different from the first wavelength. In particular, it is thereby allowed that the degree of contamination is determined depending on the at least two different wavelengths. Thereby, the degree of contamination can be reliably determinable in particular with respect to the contamination material and/or the contamination intensity. In particular since different contamination materials have different influences with respect to the transmitted light beams in a spectral analysis, thus, the degree of contamination can be reliably determined, whereby a corresponding cleaning signal can be generated in improved manner, whereby the front element 11 can in turn be cleaned in improved manner. Thereby, improved operation of an optical sensor such as for example the camera 4 can in particular be realized.

## Claims

1. Cleaning apparatus (9) for cleaning a transparent front element (11) of an optical sensor of a camera (4) for a motor vehicle (1), including the transparent front element (11) and including a light source (13) for externally illuminating the front element (11) with light beams (14), including a detector device (18) for receiving the light beams passed through the front element (11), and including an evaluation device (19), which is formed for evaluating the light beams received by the detector device (18) for determining a degree of contamination of the front element (11), wherein a control signal (22) for a cleaning device (10) of the cleaning apparatus (9) is generated depending on the evaluation such that the front element (11) is cleanable by means of the cleaning device (10),
**characterised in that**
the light source (13) comprises at least two light emitting diodes (16, 17), wherein light beams (14) with a first wavelength can be emitted by a first light emitting diode (16) and light beams (14) with a second wavelength different from the first wavelength can be emitted by at least one second light emitting diode (17).

2. Cleaning apparatus (9) according to claim 1,
**characterized in that**
at least the cleaning device (10) is mounted displaceable relative with respect to the front element (11), in particular is mounted on a telescopic arm (31), and/or the light source (13) and the cleaning apparatus (9) are disposed in a common housing (15).

3. Cleaning apparatus (9) according to any one of the preceding claims,
**characterized in that**
the cleaning apparatus (9) is formed for generating ultrasonic waves, wherein the front element (11) is cleanable by means of the ultrasonic waves.

4. Cleaning apparatus (9) according to any one of the preceding claims,
**characterized in that**
the cleaning apparatus (9) comprises a liquid cleaning medium, which is stored in a cleaning reservoir (28), and the liquid cleaning medium can be sprayed onto the front element (11) via a cleaning nozzle (29) of the cleaning device (10) such that the front element (11) is cleanable by means of the cleaning medium.

5. Cleaning apparatus (9) according to any one of the preceding claims,
**characterized in that**
the cleaning apparatus (9) comprises an air pressure nozzle (30), by means of which an air jet is generable, which can be jetted to the front element (11), whereby the front element (11) is cleanable.

6. Cleaning apparatus (9) according to any one of the preceding claims,
**characterized in that**
depending on at least one received wavelength of the light beams (14), the degree of contamination is determinable and/or a contamination material and/or a contamination intensity are determinable as the degree of contamination by means of the evaluation device (19), and the control signal (22) is generable at least depending on the contamination material and/or the contamination intensity.

7. Cleaning apparatus (9) according to any one of the preceding claims,
**characterized in that**
at least information (23) of an environment of the front element (11) can be taken into account in the evaluation of the received light beams.

8. Cleaning apparatus (9) according to any one of the preceding claims,
**characterized in that**
the cleaning apparatus (9) is formed for receiving information relating to reception of light beams by an image sensor of the optical sensor (4), wherein the evaluation device (19) is formed to take into account this information in the evaluation for determining the degree of contamination of the front element (11).

9. Cleaning apparatus (9) according to any one of the preceding claims,
**characterized in that**
the cleaning apparatus (9) comprises a communication device (24) for bidirectional communication (25, 26) of information with at least one information device (27) disposed externally to the cleaning apparatus (9), wherein information (25) received from the information device (27) can be taken into account in the evaluation by the evaluation device (19).

10. Cleaning apparatus (9) according to any one of the preceding claims,
**characterized in that**
a plurality of control signals (22), in particular of different control signals (22), for the cleaning device (10) is generable by the evaluation device (19).

11. Assembly (32) with a camera (4) and with a cleaning apparatus (9) according to any one of claims 1 to 10.

12. Assembly (32) according to claim 11,
**characterized in that**
at least information of an image sensor of the camera (4) is receivable by the cleaning apparatus (9), wherein the received information of the image sensor can be taken into account in the evaluation by the evaluation device (19) for determining the degree of contamination.

## Patentansprüche

1. Reinigungsvorrichtung (9) zum Reinigen eines transparenten Frontelements (11) eines optischen Sensors einer Kamera (4) für ein Kraftfahrzeug (1), beinhaltend das transparente Frontelement (11) und beinhaltend eine Lichtquelle (13) zum externen Beleuchten des Frontelements (11) mit Lichtstrahlen (14), beinhaltend eine Detektoreinrichtung (18) zum Empfangen der durch das Frontelement (11) hindurchgegangenen Lichtstrahlen, und beinhaltend eine Bewertungseinrichtung (19), die ausgelegt ist zum Bewerten der durch die Detektoreinrichtung (18) empfangenen Lichtstrahlen zum Bestimmen eines Verschmutzungsgrads des Frontelements (11), wobei ein Steuersignal (22) für eine Reinigungseinrichtung (10) der Reinigungsvorrichtung (9) in Abhängigkeit von der Bewertung erzeugt wird, so dass das Frontelement (11) mittels der Reinigungseinrichtung (10) reinigbar ist,
**dadurch gekennzeichnet, dass**
die Lichtquelle (13) Folgendes umfasst:
mindestens zwei Leuchtdioden (16, 17), wobei Lichtstrahlen (14) mit einer ersten Wellenlänge durch eine erste Leuchtdiode (16) emittiert werden können und Lichtstrahlen (14) mit einer zweiten Wellenlänge, die sich von der ersten Wellenlänge unterscheidet, durch mindestens eine zweite Leuchtdiode (17) emittiert werden können.

2. Reinigungsvorrichtung (9) nach Anspruch 1,
**dadurch gekennzeichnet, dass**
zumindest die Reinigungseinrichtung (10) relativ zu dem Frontelement (11) verlagerbar montiert ist, insbesondere an einem Teleskoparm (31), und/oder die Lichtquelle (13) und die Reinigungsvorrichtung (9) in einem gemeinsamen Gehäuse (15) angeordnet sind.

3. Reinigungsvorrichtung (9) nach einem der vorhergehenden Ansprüche,
**dadurch gekennzeichnet, dass**
die Reinigungsvorrichtung (9) zum Erzeugen von Ultraschallwellen ausgebildet ist, wobei das Frontelement (11) mittels der Ultraschallwellen reinigbar ist.

4. Reinigungsvorrichtung (9) nach einem der vorhergehenden Ansprüche,
**dadurch gekennzeichnet, dass**
die Reinigungsvorrichtung (9) ein flüssiges Reinigungsmedium umfasst, das in einem Reinigungsreservoir (28) gespeichert ist, und dass das flüssige Reinigungsmedium über eine Reinigungsdüse (29) der Reinigungseinrichtung (10) auf das Frontelement (11) gesprüht werden kann, so dass das Frontelement (11) mittels des Reinigungsmediums reinigbar ist.

5. Reinigungsvorrichtung (9) nach einem der vorhergehenden Ansprüche,
**dadurch gekennzeichnet, dass**
die Reinigungsvorrichtung (9) eine Luftdruckdüse (30) umfasst, mittels der ein Luftstrahl erzeugbar ist, der dann auf das Frontelement (11) gestrahlt werden kann, wodurch das Frontelement (11) reinigbar ist.

6. Reinigungsvorrichtung (9) nach einem der vorhergehenden Ansprüche,
**dadurch gekennzeichnet, dass**
in Abhängigkeit von mindestens einer empfangenen Wellenlänge der Lichtstrahlen (14), der Verschmutzungsgrad bestimmbar ist und/oder ein Verschmutzungsmaterial und/oder eine Verschmutzungsintensität mittels der Bewertungseinrichtung (19) als der Verschmutzungsgrad bestimmbar sind, und das Steuersignal (22) zumindest in Abhängigkeit von dem Verschmutzungsmaterial und/oder der Verschmutzungsintensität erzeugbar ist.

7. Reinigungsvorrichtung (9) nach einem der vorhergehenden Ansprüche,
**dadurch gekennzeichnet, dass**
zumindest Informationen (23) über eine Umgebung des Frontelements (11) bei der Bewertung der empfangenen Lichtstrahlen berücksichtigt werden können.

8. Reinigungsvorrichtung (9) nach einem der vorhergehenden Ansprüche,
**dadurch gekennzeichnet, dass**
die Reinigungsvorrichtung (9) zum Empfangen von Informationen, die sich auf den Empfang von Lichtstrahlen durch einen Bildsensor des optischen Sensors (4) beziehen, ausgebildet ist, wobei die Bewertungseinrichtung (19) ausgebildet ist zum Berücksichtigen dieser Informationen bei der Bewertung zum Bestimmen des Verschmutzungsgrads des Frontelements (11) .

9. Reinigungsvorrichtung (9) nach einem der vorhergehenden Ansprüche,
**dadurch gekennzeichnet, dass**
die Reinigungsvorrichtung (9) eine Kommunikationseinrichtung (24) für bidirektionale Kommunikation (25, 26) von Informationen mit mindestens einer Informationseinrichtung (27), die extern der Reinigungsvorrichtung (9) angeordnet ist, umfasst, wobei von der Informationseinrichtung (27) empfangene Informationen (25) bei der Bewertung durch die Bewertungseinrichtung (19) berücksichtigt werden können.

10. Reinigungsvorrichtung (9) nach einem der vorhergehenden Ansprüche,
**dadurch gekennzeichnet, dass**
eine Vielzahl von Steuersignalen (22), insbesondere von verschiedenen Steuersignalen (22), für die Reinigungseinrichtung (10) durch die Bewertungseinrichtung (19) erzeugbar ist.

11. Baugruppe (32) mit einer Kamera (4) und mit einer Reinigungsvorrichtung (9) nach einem der Ansprüche 1 bis 10.

12. Baugruppe (32) nach Anspruch 11,
**dadurch gekennzeichnet, dass**
zumindest Informationen von einem Bildsensor der Kamera (4) durch die Reinigungsvorrichtung (9) empfangbar sind, wobei die empfangenen Informationen des Bildsensors bei der Bewertung durch die Bewertungseinrichtung (19) zum Bestimmen des Verschmutzungsgrads berücksichtigt werden können.

## Revendications

1. Appareil de nettoyage (9) pour nettoyer un élément avant transparent (11) d'un capteur optique d'une caméra (4) pour un véhicule automobile (1), comprenant l'élément avant transparent (11) et comprenant une source de lumière (13) pour éclairer extérieurement l'élément avant (11) avec des faisceaux lumineux (14), comprenant un dispositif de détection (18) pour recevoir les faisceaux lumineux traversant l'élément avant (11), et comprenant un dispositif d'évaluation (19), qui est formé pour évaluer les faisceaux lumineux reçus par le dispositif de détection (18) pour déterminer un degré de contamination de l'élément avant (11), un signal de commande (22) pour un dispositif de nettoyage (10) de l'appareil de nettoyage (9) étant généré en fonction de l'évaluation de sorte que l'élément avant (11) puisse être nettoyé au moyen du dispositif de nettoyage (10)
**caractérisé en ce que**
la source lumineuse (13) comprend au moins deux diodes électroluminescentes (16, 17), des faisceaux lumineux (14) d'une première longueur d'onde pouvant être émis par une première diode électroluminescente (16) et des faisceaux lumineux (14) d'une deuxième longueur d'onde différente de la première longueur d'onde pouvant être émis par au moins une deuxième diode électroluminescente (17).

2. Appareil de nettoyage (9) selon la revendication 1,
**caractérisé en ce que**
au moins le dispositif de nettoyage (10) est monté déplaçable par rapport à l'élément avant (11), en particulier est monté sur un bras télescopique (31), et/ou la source lumineuse (13) et l'appareil de nettoyage (9) sont disposés dans un boîtier commun (15).

3. Appareil de nettoyage (9) selon l'une quelconque des revendications précédentes,
**caractérisé en ce que**
l'appareil de nettoyage (9) est formé pour générer des ondes ultrasonores, l'élément avant (11) pouvant être nettoyé au moyen des ondes ultrasonores.

4. Appareil de nettoyage (9) selon l'une quelconque des revendications précédentes,
**caractérisé en ce que**
l'appareil de nettoyage (9) comprend un produit de nettoyage liquide, qui est stocké dans un réservoir de nettoyage (28), et le produit de nettoyage liquide peut être pulvérisé sur l'élément avant (11) par l'intermédiaire d'une buse de nettoyage (29) du dispositif de nettoyage (10) de sorte que l'élément avant (11) puisse être nettoyé au moyen du produit de nettoyage.

5. Appareil de nettoyage (9) selon l'une quelconque des revendications précédentes,
**caractérisé en ce que**
l'appareil de nettoyage (9) comprend une buse à pression d'air (30), au moyen de laquelle un jet d'air peut être généré, qui peut être projeté sur l'élément avant (11), de sorte que l'élément avant (11) est nettoyable.

6. Appareil de nettoyage (9) selon l'une quelconque des revendications précédentes,
**caractérisé en ce que**
en fonction d'au moins une longueur d'onde reçue des faisceaux lumineux (14), le degré de contamination est déterminable et/ou un matériau de contamination et/ou une intensité de contamination sont déterminables comme degré de contamination au moyen du dispositif d'évaluation (19), et le signal de commande (22) est généré au moins en fonction du matériau de contamination et/ou de l'intensité de contamination.

7. Appareil de nettoyage (9) selon l'une quelconque des revendications précédentes,
**caractérisé en ce que**
au moins des informations (23) sur l'environnement de l'élément avant (11) peuvent être prises en compte dans l'évaluation des faisceaux lumineux reçus.

8. Appareil de nettoyage (9) selon l'une quelconque des revendications précédentes,
**caractérisé en ce que**
l'appareil de nettoyage (9) est formé pour recevoir des informations relatives à la réception de faisceaux lumineux par un capteur d'image du capteur optique (4), le dispositif d'évaluation (19) étant formé pour prendre en compte ces informations dans l'évaluation visant à déterminer le degré de contamination de l'élément avant (11).

9. Appareil de nettoyage (9) selon l'une quelconque des revendications précédentes,
**caractérisé en ce que**
l'appareil de nettoyage (9) comprend un dispositif de communication (24) pour la communication bidirectionnelle (25, 26) d'informations avec au moins un dispositif d'informations (27) disposé à l'extérieur de l'appareil de nettoyage (9), les informations (25) reçues du dispositif d'informations (27) pouvant être prises en compte dans l'évaluation par le dispositif d'évaluation (19).

10. Appareil de nettoyage (9) selon l'une quelconque des revendications précédentes,
**caractérisé en ce que**
une pluralité de signaux de commande (22), en particulier de signaux de commande différents (22), pour le dispositif de nettoyage (10) peut être générée par le dispositif d'évaluation (19).

11. Ensemble (32) doté d'une caméra (4) et d'un appareil de nettoyage (9) selon l'une quelconque des revendications 1 à 10.

12. Ensemble (32) selon la revendication 11, **caractérisé en ce que**
au moins des informations d'un capteur d'image de l'appareil photo (4) sont recevables par l'appareil de nettoyage (9), les informations reçues du capteur d'image pouvant être prises en compte dans l'évaluation par le dispositif d'évaluation (19) pour déterminer le degré de contamination.
